Europäisches Patentamt

(19) European Patent Office    (11) Publication number:    **0 043 672**

Office européen des brevets    **B1**

(12)    **EUROPEAN PATENT SPECIFICATION**

(45) Date of publication of patent specification: **15.05.85**    (51) Int. Cl.⁴: **B 21 D 26/10, F 16 L 55/16**

(21) Application number: **81302831.3**

(22) Date of filing: **23.06.81**

(54) Pipe repair methods and apparatus using an electromagnetically exploded filament.

(30) Priority: **07.07.80 US 166064**

(43) Date of publication of application:
**13.01.82 Bulletin 82/02**

(45) Publication of the grant of the patent:
**15.05.85 Bulletin 85/20**

(84) Designated Contracting States:
**AT BE CH DE FR GB IT LI LU NL SE**

(56) References cited:
**CH-A- 515 757**
**DE-A-1 911 424**
**DE-B-1 806 283**
**US-A-3 203 212**
**US-A-3 208 254**
**US-A-4 069 573**

**INDUSTRIE ANZEIGER, Vol. 97, No. 24, 21 March 1975, Essen L. RAFAILOFF et al. "Drahtexplosionen und ihre Anwendung zum Fügen von Rohren mit kleinem Innendurchmesser in Bohrungen", pages 449 to 452**

(73) Proprietor: **Cenanovic, Matija**
**2567 Annelyn Court**
**Mississauga Ontario L5C 2Z7 (CA)**

(72) Inventor: **Cenanovic, Matija**
**2567 Annelyn Court**
**Mississauga Ontario L5C 2Z7 (CA)**

(74) Representative: **Smith, Norman Ian et al**
**F.J. CLEVELAND & COMPANY 40-43 Chancery Lane**
**London WC2A 1JQ (GB)**

## Description

This invention relates generally to techniques for repairing pipes, by patching or plugging, more particularly at locations therealong which are not readily accessible for repair by known techniques.

In a water-moderated nuclear reactor, for example, the moderator pipes are subjected to vibration-induced mechanical wear at specific locations at which hangers are located. In the course of time the wall of a pipe becomes worn resulting in leakage which calls for prompt attention. However, if the defect occurs within the reactor vault, as is likely to be the case, it is not readily accessible as it is encased within concrete shielding and, furthermore, is within a highly radioactive region.

In certain cases it would be possible to isolate a leaky pipe by inserting a plug, but the difficulty would be to feed the plug along the pipe past its various bends which would normally prevent its passage. In order to plug a pipe it is generally necessary to expand the pipe at certain locations, such as elbows, to permit passage of the plug. If the particular location is not accessible from outside the pipe, such expansion must be effected from inside the pipe and must be effected without rupturing or weakening the pipe.

It is therefore critically important that the pipe be expanded by a controlled amount which can be determined beforehand.

Techniques for explosively forming workpieces, and specifically techniques for expanding tubular metal workpieces by means of pressure wave generated by electromagnetically exploding a conductive filament, have long been known. Such techniques are disclosed, for example, in United States Patent Nos. 3,203,212 and 3,208,254, Swiss Patent No. 515757 and German Patent Specification Nos. 1911424 and 1806283. These known techniques are applicable to the forming of certain workpieces as described in those publications, but cannot be applied to the expansion or repair of a pipe at a remote exteriorly inaccessible location because they afford no means to control the energy of the explosion and hence the energy of the resultant pressure waves. Indeed, in the majority of known techniques the conductive filament is used simply as an ignition wire to initiate the arc discharge, particularly in the case of underwater discharge, and no attempt has been made to control the energy of the initial shock wave by controlling the strike of the discharge itself. Thus, although a known electrical charge, stored in a capacitor for example, may be employed to initiate the explosion, much of the energy is dissipated and so the energy of the shock wave produced by the initial strike is indeterminate. An article in Industrie—Anzeiger 97 Jg Nr. 24, 21 March 1975 pages 449—452 describes the deformation of a pipe by means of a shock wave in which the majority of the energy is produced by the explosion of a wire.

The filament is positioned in an energy transfer medium in the pipe and exploded electromagnetically by rapidly discharging an electrical charge through the filament. The resulting shock wave causes the pipe to expand. However no consideration is given to controlling the amount of deformation.

It is also known from US—A—4069573 to expand a pipe at an externally inaccessible location but not by an exploding wire technique.

The present invention is based on the concept of concentrating substantially the whole of the energy of the discharge into the explosion of the filament itself in a controlled manner thereby to predetermine the energy of the resultant shock wave.

This can be accomplished according to one aspect of the present invention which provides a method of expanding a metal pipe at an exteriorly inaccessible predetermined location therealong, which comprises positioning a conductive filament concentrically within the pipe at said predetermined location, the filament being immersed in an energy transfer medium filling the space between the filament and the pipe and electromagnetically exploding the filament thereby to initiate a shock wave which is transmitted through the medium to impinge on the pipe thereby to expand the pipe plastically, exploding the filament by rapidly discharging therethrough a predetermined electrical charge whereby to initiate a shock wave of predetermined energy and so expand the pipe by a controlled amount, the filament occupying a volume whose maximum dimension is not more than about one eighth the internal diameter of the pipe such that the shock wave has a substantially spherical wave front.

Typically, the electrical charge is derived from a capacitor of known capacitance charged to a known voltage, and conducted along a shielded cable extending along the tubular member. The energy of the discharge, and therefore the energy of the shock wave, can thus be controlled so as to achieve the required amount of plastic expansion of the tubular member having regard to its known metallurgical properties. The energy transfer medium may be a non-explosive liquid, such as water normally present in the pipe, or it may be a non-explosive water-soluble solid or gel. Suitable water soluble polymers include polyvinyl alcohol, methyl cellulose and polyacrylic acid. DL Hand Cleaner was also found suitable.

Instead of plugging a pipe it may be preferable to patch or line it at the location at which the pipe has become worn, or is expected to become worn. To this end, according to another aspect of the invention there is provided a method of lining the internal surface of a pipe at an exteriorly inaccessible predetermined location therealong, which comprises positioning a metallic sleeve within the pipe at said predetermined location, positioning a conductive filament concentrically within the metal sleeve, the space between the filament and the sleeve being filled with an energy transfer medium and electromagnetically exploding the filament thereby to initiate a shock wave which is transmitted through the medium to impinge upon the sleeve and so expand the sleeve plastically, exploding the filament by discharging therethrough a predetermined electrical charge thereby to initiate a shock wave of predetermined energy, the sleeve being expanded into cold welding relation with said internal surface of the pipe.

The dimensions of the filament are small in relation to the internal diameter of the sleeve such that the shock wave has a substantially spherical wave front, that is the filament occupies a volume whose maximum dimension is not more than about one eighth the internal diameter of the tubular insert. The interior and exterior surfaces of the sleeve are preferably surfaces of revolution, the exterior surface being ellipsoidal, and the wall thickness of the sleeve (i.e. the mass profile) tapering symmetrically towards its ends. The exterior surface should be configured so that the angle of impact at each point at which said exterior surface impinges on the internal surface of the pipe lies within the range at which cold welding can take place, typically from 2°—7°.

A further aspect of the invention provides a device for lining the internal surface of a pipe at a predetermined location therealong, comprising a metal sleeve, a conductive filament positioned concentrically within the sleeve, means for advancing the sleeve and the conductive filament in predetermined relation to one another along the pipe to said predetermined location, a capacitor positioned externally of the pipe, and circuit means connecting the capacitor with the filament, the circuit means including a flexible cable and a switch operable to discharge the capacitor through the filament to explode the filament, the metallic sleeve having interior and exterior surfaces which are coaxial surfaces of revolution, the exterior surface being ellipsoidal and the wall thickness of the sleeve tapering symmetrically towards the respective ends thereof and the filament occupying a volume whose maximum dimension is not more than about one-eighth the internal diameter of the sleeve such that the shock wave resulting from explosion of the filament has a substantially spherical wave front.

The invention will be described now by way of example only with particular reference to the accompanying drawings. In the drawings:

Figure 1 is a schematic diagram of an apparatus used to expand a pipe at a predetermined location;

Figure 2 illustrates one practical form of the apparatus;

Figure 3 illustrates an alternative form of the apparatus;

Figures 4 and 5 are diagrammatic representations of a sleeve used to patch or line the internal surface of a pipe to repair a leak;

Figure 6 shows in section one typical repair to a leaky pipe;

Figure 7 shows in section another repair to a leaky pipe;

Figure 8 shows a detail of a self-contained package for patching a leaky pipe;

Figure 9 is a stress-strain diagram illustrating properties of the patch material;

Figures 10 and 11 shows two alternative forms of the repair package;

Figures 12a and 12b illustrate diagrammatically a method of locating a hole in a pipe and positioning a patch at the required location;

Figure 13 shows in section part of a reactor vault to which the method of the invention is applied; and

Figure 14 is an enlarged sectional view of part of the moderator pipe shown in Figure 13.

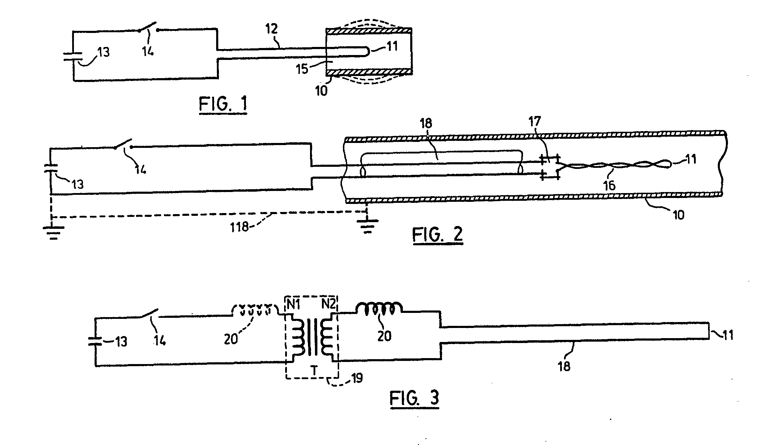

Referring to Figure 1, there is shown an apparatus for expanding a selected region of a pipe, which may be a moderator pipe of a water-moderated nuclear reactor. In this instance it is required to isolate the pipe, which may be leaking, by inserting a plug at the appropriate location. This might be accomplished quite easily by known techniques were it possible to insert the plug along the pipe to the required location, but in practice there are numerous bends in the pipe which would obstruct the passage of a plug of suitable diameter.

To permit the passage of such a plug it is necessary to expand the pipe at certain locations. Furthermore, it is most important to control the amount of expansion. This is accomplished by exploding a conductive filament within the pipe to create a shock wave having a predetermined amount of energy. As shown in Figure 1, the filament 11 is positioned concentrically within the pipe 10 at the required location, being connected via a flexible shielded coaxial or twin cable 12 to a charged capacitor 13. The capacitor, being of known capacitance and being charged to a known voltage, stores an amount of energy corresponding to the required energy of the shock wave. When the switch 14 is closed, the capacitor is rapidly discharged through the filament 11 causing it to explode. In order to establish the shock wave, of course, it is necessary that the appropriate region of the pipe 10 should be filled with a suitable energy transfer medium 15, which may be water normally present in the pipe, or another medium such as non-explosive solid or gel. The shock wave of known energy is transmitted by the medium to impinge on the inner surface of the pipe causing it to expand plastically, the energy and its rate of discharge having been selected so that the force exerted on the pipe will exceed the yield strength of the metal of the pipe by an amount just sufficient to give the required expansion.

The exploding wire process is inherently different from a spark discharge process, and is far more effective because the energy of the discharge can be released at a much higher rate. The explosion mechanism is rather complex, involving magnetohydrodynamic compression combined with thermal expansion and evaporation of the filament. Typically a 100 kA current pulse passing through a copper wire of 1 mm diameter creates a magnetic flux density at the surface of the wire of about 40 Tesla. The resulting compression, or pinch, is greater than 600 MPa (600 atmospheres) and counteracts expansion pressures caused by heating, melting and vaporization. This condition is highly unstable and results in an explosion with instant release of the accumulated energy, causing a pressure wave with an extremely steep front. The electrical discharge which follows the explosion of the wire creates another pressure wave, but this plays no part in the process as it is of similar amplitude and longer duration.

The efficiency of the exploding filament technique of the present invention therefore depends upon the ability to achieve maximum energy accumulation at the centre of the explosion before the explosion takes place. The condition can be optimized by appropriate selection of wire diameter and current pulse shape. Ideally, to achieve a shock wave having a spherical wave front the wire or filament should be small enough to behave as a point charge, and this can be accomplished by making the dimensions of the wire small in relation to the diameter of the pipe. Preferably, the wire occupies a volume whose maximum dimension is not more than about one eighth the internal diameter of the pipe. Because the initial pressure wave is of very short duration it is not necessary to contain the energy transfer medium in a closed system.

A practical form of the apparatus described above is illustrated in Figure 2. The pipe 10 to be expanded is of stainless steel and about 4 cm diameter. The filament 11 is a copper wire No. 14 gauge, 1.6 mm in diameter and 10 mm long. Means (not shown) are provided for positioning the filament concentrically within the pipe at the required location. The filament 11 is connected by a pair of leads 16 (Wire No. 6 AWG type) and a bus interface 17 to a long coaxial cable 18 extending within the pipe. The cable 18 is shielded, being 15 kV XLPE concentric neutral cable. The far end of the cable is connected via a switch 14 to a capacitor 13. The capacitor has a capacitance of 1200 µf and is charged to 10 KV, the stored energy therefore being 60 kJ. The switch is an ignitron, suitable switches being the ignitron types GL 8205 and GL 7703 supplied by General Electric Company. The addition of an optional separate ground cable 118, extending from the capacitor 13 to the pipe 10 to be expanded, it is beneficial, though not essential, to prevent rise of ground potential of the metal pipe and any connected metal structure.

As illustrated in Figure 3, the electrical circuit may include further elements for controlling or modifying the electrical discharge. As before a capacitor 13 of known capacitance and charged to a known voltage is discharged by operation of an ignitron switch 14. The resultant current pulse is transmitted by a cable 18 to the filament 11, which is selected to be of the appropriate diameter, shape, volume and configuration to control the energy release, having regard to the amount of energy to be released and the shape of the current pulse. To control the shape of the current pulse the circuit includes a pulse transformer 19, and/or one or more series inductors 20.

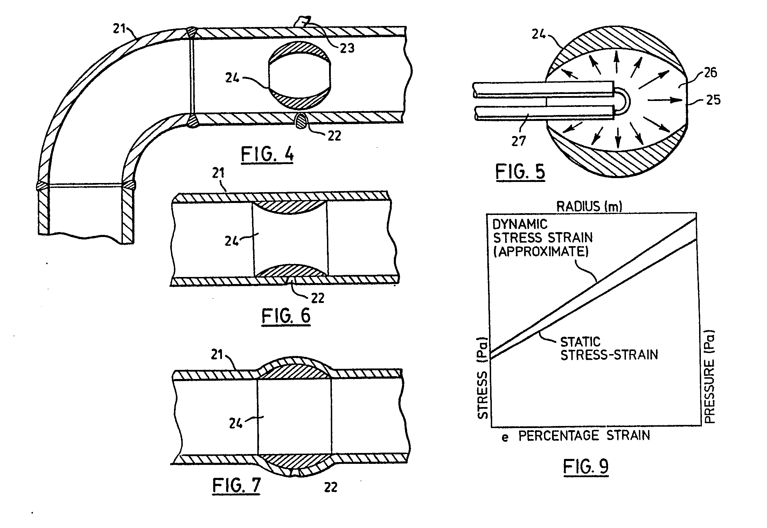

The exploding wire technique used to expand a pipe at a given location can equally well be used to expand a tubular insert or sleeve within a pipe for the purpose of repairing a leak directly. This repair technique is illustrated diagrammatically in Figures 4 to 7, which show a stainless steel pipe 21 having a hole 22 to be repaired. The hole 22 may have been worn mechanically at the location of a hanger 23 as a result of mechanical vibration over a period of time. Basically the method comprises locating a sleeve 24 within the pipe at the required location, and exploding a filament positioned centrally within the sleeve so as to expand the sleeve in cold welding relation with the inner surface of the pipe to seal the leak. Figure 4 shows the sleeve 24 located in the region of the hole 22. In this example the pipe is of stainless steel having an internal diameter of approximately 6 cms, and the sleeve is of a plastically deformable metal capable of being cold welded to the metal of the pipe, such as aluminum, aluminum alloy or stainless steel. The outside diameter of the sleeve is slightly less than the internal diameter of the pipe. Ideally, in order that the sleeve can be inserted along the pipe past numerous bends the sleeve should be spherical, but in any case the outer surface of the sleeve should be a surface of revolution and preferably ellipsoidal. In the present example the interior surface of the sleeve is also ellipsoidal, being coaxial with the exterior surface, and is configured so that the wall thickness of the sleeve tapers symmetrically towards its ends.

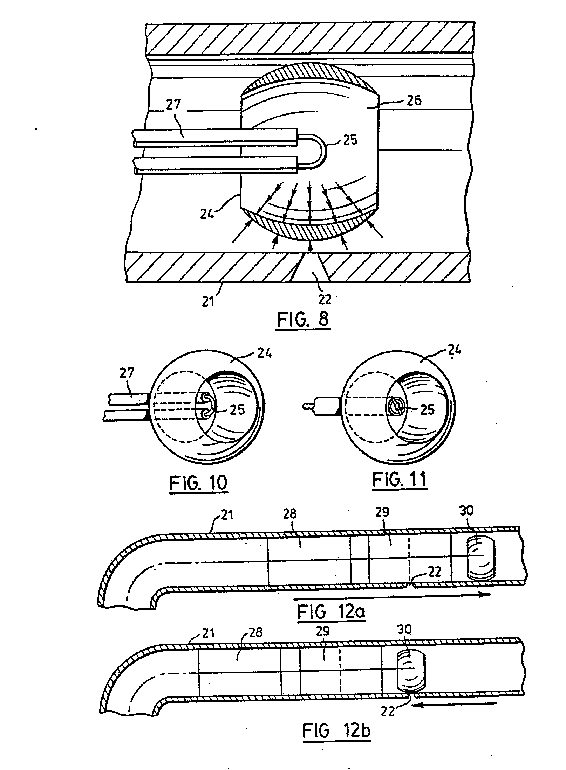

As shown in Figure 5, a conductive filament 25 is located concentrically within the sleeve 24, being immersed in an energy transfer medium, such as a water-soluble polymer or polymer soap 26, which fills the interior of the sleeve. The filament, whose dimensions are small in relation to the internal diameter of the sleeve, is a copper wire substantially the same as the wire 11 shown in Figure 2. By means of an electrical circuit as shown in Figure 2 or Figure 3, to which the filament is connected by a shielded twin cable 27, a predetermined electrical charge is rapidly discharged through the filament, exploding the filament to initiate a substantially spherical shock wave of predetermined energy. The shock wave is transmitted by the medium 26 to impinge on the inner surface of the sleeve, causing the sleeve to expand. As the sleeve expands it strikes the inner surface of the pipe 21, each point on the outer surface of the sleeve meeting the pipe surface at an angle of impact such that cold welding between the two metals can take place. With the configuration of sleeve shown, the energy of the explosion can be controlled so as to cause the exterior surface of the sleeve to become cylindrical, as in Figure 6, with substantially no plastic deformation of the pipe 21, or to cause the interior surface of the pipe to become cylindrical and flush with the interior surface of the pipe, as shown in Figure 7.

The water-soluble energy transfer medium is subsequently washed away. Alternatively, instead of using a solid or gel as the energy transfer medium one may use water that is normally present in the pipe, the filament being located within the sleeve mechanically by a spider.

In order to obtain the best results, attention must be paid to the design of the sleeve 24, as this element must not only be expanded by the required amount but must also engage the internal surface of the pipe 21 so that each point on its surface has the required velocity and makes the required angle of impact to effect a cold weld. The following considerations should be taken into account, reference being made to the diagrams of Figures 8 and 9. For simplicity it is assumed that the sleeve is substantially spherical.

The angle of impact between a hollow spherical metallic sleeve 24 and the inner wall of a leaky pipe 21 should be kept between 2°—7° to obtain an intimate bond. This angle can be easily controlled by varying the shape of the inner surface of the sleeve and consequently changing the wall thickness and the mass profile of the sleeve, as shown in Figure 8. Radial expansion of the sleeve wall during the electromagnetically created pressure wave pulse is governed by dynamic balance of stresses on any sleeve segment thus:

$$P_{wave\ pulse} = P_{inertia} + P_{plastic} \qquad (1)$$

In this analysis the effect of the air resistance is neglected. The pressure necessary to overcome the inertial of the sleeve wall is

$$P_{inertia} = w\ d\ \frac{d^2 r}{dt^2} \qquad (2)$$

where
w = the wall thickness
d = the density of the sleeve material.

The pressure necessary to deform the sleeve plastically can be obtained from the approximate dynamic stress-strain diagram for the sleeve material, s(e) shown in Figure 9.

$$s(e) = sy + \left( \frac{s_t - s_y}{e_t} \right) e \qquad (3)$$

This relationship can be transformed to express the pressure, by using the following equations

$$P = s\ \frac{w}{R} \qquad (4)$$

$$e = \frac{r}{R} \qquad (5)$$

Hence

$$P_{plastic}\ (r) = \underbrace{s_y \frac{w}{R}}_{P} + \underbrace{\frac{w}{R} \left( \frac{s_t - s_y}{e_t} \right) \cdot r}_{Q} \qquad (6)$$

or

$$P_{plastic}(r) = P_y + Q \cdot r \qquad (7)$$

By annealing the sleeve, the pressure necessary to achieve plastic deformation can be reduced. The pressure pulse waveform can be controlled by the selection of the exploding wire diameter and the impulse current waveform, thus influencing the strain rate and changing the dynamic stress-strain relationship. The velocities $v_A$ and $v_B$, of the two segments at locations A and B, of the sleeve as shown in Figure 8, can be calculated from equation (1). For simplicity the applied pressure wave pulse is assumed to be uniform.

$$w_A d\ \frac{d^2 r_A(t)}{dt^2} + P_{yA} + Q_A \cdot r_A(t)$$

$$= w_B d\ \frac{d^2 r_B(t)}{dt^2} + P_{yB} + Q_B\ r_B(t) \qquad (8)$$

or

$$w_A d\ \frac{d\ v_A(t)}{dt} + P_{yA} + Q_A \cdot r_A(t)$$

$$= w_B \cdot d\ \frac{d\ v_B(t)}{dt} + P_{yB} + Q_B\ r_B(t) \qquad (9)$$

Thus, the critical angle of impact can be controlled by controlling the local velocity of each segment, which in turn is a function of the wall thickness of the segment. Further control of the angle of impact can be achieved by varying the local density of the energy transfer medium, for examply by using two or more water-soluble polymers appropriately located within the sleeve.

Figure 10 shows a spherically shaped sleeve 24 having a centrally positioned filament 25 to which the current pulse is supplied via twin cables 27. Figure 11 shows a similar sleeve 24 having a centrally positioned filament 25 to which the current pulse is supplied via a coaxial cable. More than one filament may be employed.

In order to employ the method described above it is of course necessary first to locate the region of the pipe to be repaired and then to move the sleeve and the exploding filament to the required location. This is accomplished using known devices. Ultrasonic detectors for locating the position of a defect such as a hole in a pipe are known in the art. Also, devices capable of travelling along the interior of a pipe to carry other equipment therealong are known. Using these devices, an ultrasonic locating probe and a mechanical mover, connected in train with a patch package, i.e. a repair sleeve and explosive filament, it is a simple matter to position the patch package at the required location. As illustrated in Figures 12a and 12b, this is done by advancing the train consisting of the mechanical mover 28, locating probe 29, and patch package 30 along the interior of the pipe 21 until the hole 22 is located by the locating probe 29, as shown in Figure 12a. At this position the patch package 30 is positioned at a known distance beyond the hole 22. The mechanical mover is therefore reversed and caused to travel through the same distance, thereby bringing the patch package to the position of the hole as shown in Figure 12b.

The locating probe is essentially an ultrasonic transducer whose parameters are chosen to suit the inside diameter of the pipe in question. For example, for a pipe having an inside diameter of 1.5 inches a suitable transducer would have an operating frequency of 5 MHz and a diameter of 0.25 inch focussed to 0.75 inch in water. Such transducers are manufactured by Megasonic Inc. of Edina, Mn. The mechanical mover may be of the type described in "Electrical World", May 1, 1979 issue, at page 80, or it may be of the type described in United States Patent No. 3,224,734, dated December 1, 1965 to J. D. Hill and entitled "Pneumatic Self-Propelled Apparatus". Alternatively, it is possible in some cases to move the repair package simply by pushing the cable leads manually.

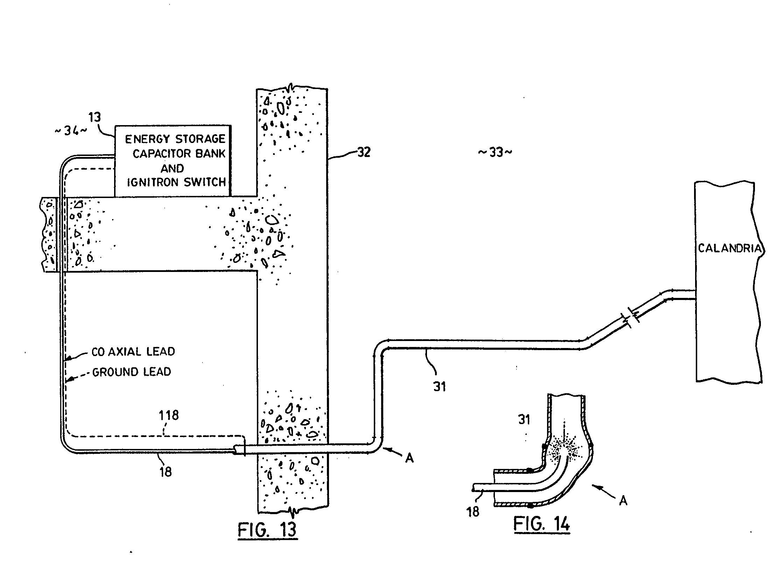

Figure 13 shows part of the structure of a water-moderated nuclear reactor containing a moderator pipe 31 wherein it is necessary to expand the pipe at the region A. This part of the pipe is shown in section in Figure 14. A concrete wall 32 separates a high radiation zone 33 of the reactor from the low radiation zone 34, the pipe 31 extending through the wall. The region A of the pipe 31 is accessible only from the inside. Thus, the coaxial cable 18 from the capacitor 13 is inserted into the pipe from the low radiation zone 34 to the required location. The ground lead 118 is shown dotted.

**Claims**

1. A method of expanding a metal pipe (10) at an exteriorly inaccessible predetermined location therealong, which comprises positioning a conductive filament (11) concentrically within the pipe (10) at said predetermined location, the filament being immersed in an energy transfer medium filling the space between the filament (11) and the pipe (10), and electromagnetically exploding the filament thereby to initiate a shock wave which is transmitted through the medium to impinge on the pipe thereby to expand the pipe plastically, exploding the filament (11) by rapidly discharging therethrough a predetermined electrical charge whereby to initiate a shock wave of predetermined energy and so expand the pipe (10) by a controlled amount, the filament (11) occupying a volume whose maximum dimension is not more than one eighth the internal diameter of the pipe (10) such that the shock wave has a substantially spherical wave front.

2. A method according to claim 1 wherein the energy transfer medium is a non-explosive liquid normally present in the pipe (10).

3. A method according to claim 1 wherein the energy transfer medium is a non-explosive water-soluble solid or gel.

4. A method of lining the internal surface of a pipe (21) at an exteriorly inaccessible predetermined location therealong, which comprises positioning a metallic sleeve (24) within the pipe at said predetermined location, positioning a conductive filament (25) concentrically within the metal sleeve, the space between the filament (25) and the sleeve (24) being filled with an energy transfer medium (26), and electromagnetically exploding the filament (25) thereby to initiate a shock wave which is transmitted through the medium to impinge upon the sleeve (24) and so expand the sleeve plastically, exploding the filament (25) by discharging therethrough a predetermined electrical charge thereby to initiate a shock wave of predetermined energy, the sleeve (24) being expanded into cold welding relation with said internal surface of the pipe (21), and wherein the filament (25) occupies a volume whose maximum dimension is not more than about one-eighth the internal diameter of the sleeve (24) such that the shock wave has a substantially spherical wave front.

5. A method according to claim 4 wherein the interior and exterior surfaces of the sleeve (24) are coaxial surfaces of revolution, the exterior surface being ellipsoidal, the wall thickness of the sleeve tapering symmetrically towards its respective ends.

6. A method according to claim 5 wherein the interior surface of the sleeve (24) is ellipsoidal.

7. A method according to claim 6 wherein the exterior surface of the sleeve (24) is spherical.

8. A method according to claim 5 wherein the energy transfer medium (26) is a non-explosive liquid normally present in the pipe.

9. A method according to claim 5 wherein the energy transfer medium (26) is a non-explosive water-soluble solid or gel.

10. A method according to claim 5 wherein the sleeve (24) is of aluminium and has a configuration such that the angle of impact of each point of said exterior surface with said internal surface of the pipe lies between 2° and 7°.

11. A method according to claim 5 wherein the sleeve (24) and the filament (25) are positioned at said predetermined location by first advancing them along the pipe (21) in fixed relation to one another to a position at a known distance from said location, and then moving them along the pipe (21) through said known distance to said known location.

12. A device for lining the internal surface of a pipe (21) at a predetermined location therealong, comprising a metal sleeve (24), a conductive filament (11, 25) positioned concentrically within the sleeve, means (28) for advancing the sleeve and the conductive filament in predetermined relation to one another along the pipe to said predetermined location, a capacitor (13) positioned externally of the pipe, and circuit means connecting the capacitor with the filament, the circuit means (12—18) including a flexible cable (12, 16, 18) and a switch (14) operable to discharge the capacitor through the filament to explode the filament, the metallic sleeve (24) has interior and exterior surfaces which are coaxial surfaces of revolution, the exterior surface being ellipsoidal and the wall thickness of the sleeve tapering symmetrically towards the respective ends thereof, and the filament (11, 25) occupying a volume whose maximum dimension is not more than about one-eighth the internal diameter of the sleeve (24) such that the shock wave resulting from explosion of the filament has a substantially spherical wave front.

13. A device according to claim 12 wherein the interior surface of the sleeve (24) is ellipsoidal.

14. A device according to claim 12 wherein the exterior surface of the sleeve (24) is spherical.

15. A device according to claim 12 wherein the sleeve (24) is packed with a water-soluble acoustic energy transfer medium (26) filling the space between the filament and the sleeve.

**Patentansprüche**

1. Verfahren zum Ausdehnen eines Metallrohres (10) an einer von aussen unzugänglichen vorbestimmten Stelle an ihm, bei welchem ein leitender Draht (11) konzentrisch in dem Rohr (10) an der vorbestimmten Stelle angeordnet wird, wobei der Draht in einem Energieübertragungsmedium untergetaucht ist, das den Raum zwischen dem Draht (11) und dem Rohr (10) füllt, und der Draht elektromagnetisch explodieren gelassen wird, um dadurch eine Stoßwelle auszulösen, die durch das Medium hindurch übertragen wird, um auf dem Rohr aufzuprallen, um dadurch das Rohr plastisch auszudehnen, der Draht (11) durch rasches Entladen einer vorbestimmten elektrischen Ladung durch ihn hindurch explodieren gelassen wird, wodurch eine Stoßwelle mit einer vorbestimmten Energie ausgelöst wird und das Rohr (10) um einen bestimmten Betrag ausgedehnt wird, wobei der Draht (11) ein Volumen einnimmt, dessen maximale Abmessung nicht mehr als ein Achtel des inneren Durchmessers des Rohres (10) beträgt derart, daß die Stoßwelle eine im wesentlichen sphärische Wellenfront hat.

2. Verfahren nach Anspruch 1, wobei das Energieübertragungsmedium eine nichtexplosive Flüssigkeit ist, die normalerweise in dem Rohr (10) vorhanden ist.

3. Verfahren nach Anspruch 1, wobei das Energieübertragungsmedium ein nichtexplosiver wasserlöslicher Feststoff oder ein Gel ist.

4. Verfahren zum Auskleiden der inneren Oberfläche eines Rohres (21) an einer von außen unzugänglichen vorbestimmten Stelle an ihm, bei welchem eine Metallhülse (24) in dem Rohr an der vorbestimmten Stelle angeordnet wird, ein leitender Draht (25) konzentrisch in der Metallhülse angeordnet wird, wobei der Raum zwischen dem Draht (25) und der Hülse (24) mit einem Energieübertragungsmedium (26) gefüllt ist, und der Draht (25) elektromagnetisch explodieren gelassen wird, um dadurch eine Stoßwelle auszulösen, die durch das Medium hindurch übertragen wird, um auf der Hülse (24) aufzuprallen und die Hülse somit plastisch auszudehnen, der Draht (25) durch Entladen einer vorbestimmten elektrischen Ladung durch ihn hindurch explodieren gelassen wird, um dadurch eine Stoßwelle eine vorbestimmten Energie auszulösen, wobei die Hülse (24) in eine Kaltschweißverbindung mit der inneren Oberfläche des Rohres (25) ausgedehnt wird, und wobei der Draht (25) ein Volumen einnimmt, dessen maximale Abmessung nicht mehr als ungefähr ein Achtel des inneren Durchmessers der Hülse (24) beträgt, derart, daß die Stoßwelle eine im wesentlichen sphärische Wellenfront hat.

5. Verfahren nach Anspruch 4, wobei die innere und die äußere Oberfläche der Hülse (24) koaxiale Rotationsfläche sind, wobei die äußere Oberfläche ellipsoidisch ist und die Wanddicke der Hülse symmetrisch auf ihre jeweiligen Enden zu sich verjüngt.

6. Verfahren nach Anspruch 5, wobei die innere Oberfläche der Hülse (24) ellipsoidisch ist.

7. Verfahren nach Anspruch 6, wobei die äußere Oberfläche der Hülse (24) sphärisch ist.

8. Verfahren nach Anspruch 5, wobei das Energieübertragungsmedium (26) eine nichtexplosive Flüssigkeit ist, die normalerweise in dem Rohr vorhanden ist.

9. Verfahren nach Anspruch 5, wobei das Energieübertragungsmedium (26) ein nichtexplosiver wasserlöslicher Feststoff oder ein Gel ist.

10. Verfahren nach Anspruch 5, wobei die Hülse (24) aus Aluminium ist und eine solche Form hat, daß der Aufprallwinkel zwischen jedem Punkt der äußeren Oberfläche und der inneren Oberfläche des Rohres zwischen 2° und 7° liegt.

11. Verfahren nach Anspruch 5, wobei die Hülse (24) und der Draht (25) an der vorbestimmten Stelle dadurch angeordnet werden, daß sie zuerst entlang des Rohres (21) in einer festen Beziehung zueinander zu einer Position in einem vorbestimmten Abstand von der Stelle vorgerückt und sie dann entlang des Rohres (21) über den bekannten Abstand hinweg zu der bekannten Stelle bewegt werden.

12. Vorrichtung zum Auskleiden der inneren Oberfläche eines Rohres (21) an einer vorbestimmten Stelle an ihm, mit einer Metallhülse (24), einem leitenden Draht (11, 25), der konzentrisch in der Hülse angeordnet ist, einer Einrichtung (28) zum Vorrücken der Hülse und des leitenden Drahtes in einer vorbestimmten Beziehung zueinander entlang des Rohres zu der vorbestimmten Stelle, einem Kondensator (13), der außerhalb des Rohres angeordnet ist, und einer Schaltkreiseinrichtung, die den Kondensator mit dem Draht verbindet, wobei die Schaltkreiseinrichtung (12—18) ein biegsames Kabel (12, 16, 18) und einen Schalter (17) aufweist, der betätigbar ist, um den Kondensator durch den Draht hindurch zu entladen, um den Draht explodieren zu lassen, wobei die Metallhülse (24) eine innere und eine äußere Oberfläche hat, die koaxiale Rotationsflächen sind, wobei die äußere Oberfläche ellipsoidisch ist und die Wanddicke der Hülse sich symmetrisch auf ihre jeweiligen Enden zu verjüngt und wobei der Draht (11, 25) ein Volumen einnimmt, dessen maximale Abmessung nicht mehr als ungefähr ein Achtel des Innendurchmessers der Hülse (24) beträgt, derart, daß die Stoßwelle, die aus der Explosion des Drahtes resultiert, eine im wesentlichen sphärische Wellenfront hat.

13. Vorrichtung nach Anspruch 12, wobei die innere Oberfläche der Hülse (24) ellipsoidisch ist.

14. Vorrichtung nach Anspruch 12, wobei die äußere Oberfläche der Hülse (24) sphärisch ist.

15. Vorrichtung nach Anspruch 12, wobei die Hülse (24) mit einem wasserlöslichen Akustikenergieübertragungsmedium (26) verpackt ist, das den Raum zwischen dem Draht und der Hülse auffüllt.

**Revendications**

1. Procédé de dilatation d'un tube métallique (10) en un emplacement prédéterminé inaccessible de l'extérieur le long de celui-ci, caractérisé en ce qu'il consiste à situer un filament conducteur (11) concentriquement à l'intérieur du tube (10) audit emplacement prédéterminé, le filament étant plongé dans un milieu de transfert d'énergie remplissant l'espace entre le filament (11) et le tube (10), et à faire exploser électromagnétiquement le filament pour amorcer ainsi une onde de choc qui est transmise à travers le milieu afin de venir frapper le tube, de manière à dilater le tube de façon plastique, à faire exploser le filament (11) en déchargeant rapidement dans celui-ci une charge électrique prédéterminée afin d'amorcer ainsi une onde de choc d'énergie prédéterminée et de dilater ainsi le tube (10) dans une mesure commandée, le filament (11) occupant un volume dont la dimension maximum n'est pas supérieure à 1/8 ème du diamètre interne du tube (10), de telle sorte que l'onde de choc possède un front d'onde pratiquement sphérique.

2. Procédé suivant la revendication 1, caractérisé en ce que le milieu de transfert d'énergie est un liquide non explosif normalement présent dans le tube (10).

3. Procédé suivant la revendication 1, caractérisé en ce que le milieu de transfert d'énergie est un solide ou un gel non explosif soluble dans l'eau.

4. Procédé de revêtement de la surface interne d'un tube (21) en un emplacement prédéterminé inaccessible de l'extérieur le long de celui-ci, caractérisé en ce qu'il consiste à situer un manchon métallique (24) à l'intérieur du tube audit emplacement prédéterminé, à situer un filament conducteur (25) concentriquement à l'intérieur du manchon métallique, l'espace entre le filament (25) et le manchon (24) étant rempli avec un milieu de transfert d'énergie (26), et à faire exploser électromagnétiquement le filament (25) pour amorcer ainsi une onde de choc qui est transmise à travers le milieu afin de venir frapper le manchon (24) et dilater ainsi le manchon de manière plastique, à faire exploser le filament (25) en déchargeant dans celui-ci une charge électrique prédéterminée, afin d'amorcer ainsi une onde de choc d'énergie prédéterminée, le manchon (24) étant dilaté en association de soudage à froid avec ladite surface interne du tube (21), et en ce que le filament (25) occupe un volume dont la dimension maximum n'est pas supérieure à environ 1/8 ème du diamètre interne du manchon (24), de telle sorte que l'onde de choc possède un front d'onde pratiquement sphérique.

5. Procédé suivant la revendication 4, caractérisé en ce que les surfaces interne et externe du manchon (24) sont des surfaces de révolution coaxiales, la surface externe étant ellipsoïde, l'épaisseur de paroi du manchon se réduisant symétriquement vers ses extrémités respectives.

6. Procédé suivant la revendication 5, caractérisé en ce que la surface interne du manchon (24) est ellipsoïde.

7. Procédé suivant la revendication 6, caractérisé en ce que la surface externe du manchon (24) est sphérique.

8. Procédé suivant la revendication 5, caractérisé en ce que le milieu de transfert d'énergie (26) est un liquide non explosif normalement présent dans le tube.

9. Procédé suivant la revendication 5, caractérisé en ce que le milieu de transfert d'énergie (26) est un solide ou un gel non explosif soluble dans l'eau.

10. Procédé suivant la revendication 5, caractérisé en ce que le manchon (24) est un aluminium et possède une configuration telle que l'angle d'impact de chaque point de ladite surface extérieure avec ladite surface interne du tube se situe entre 2° et 7°.

11. Procédé suivant la revendication 5, caractérisé en ce que le manchon (24) et le filament (25) sont situés audit emplacement prédéterminé en les faisant d'abord avancer le long du tube (21) en association fixe l'une par rapport à l'autre, jusqu'à une position à une distance connue dudit emplacement, et en les déplaçant ensuite le long du tube (21) sur ladite distance connue jusqu'audit emplacement connu.

12. Dispositif pour revêtir la surface interne d'un tube (21) en un emplacement prédéterminé le long de celui-ci, caractérisé en ce qu'il comprend un manchon métallique (24), un filament conducteur (11, 25) situé concentriquement à l'intérieur du manchon, des moyens (28) pour faire avancer le manchon et le filament conducteur en association prédéterminée entre eux le long du tube jusqu'audit emplacement prédéterminé, un condensateur (13) situé à l'extérieur du tube, et des moyens de circuit connectant le condensateur au filament, les moyens de circuit (12—18) comprenant un câble souple (12, 16, 18) et un commutateur (14) pouvant être actionné pour décharger le condensateur dans le filament afin de faire exploser le filament, le manchon métallique (24) possède des surfaces interne et externe qui sont des surfaces de révolution coaxiales, la surface externe étant ellipsoïde et l'épaisseur de paroi du manchon se réduisant symétriquement vers ses extrémités respectives, et le filament (11, 25) occupant un volume dont la dimension maximum n'est pas supérieure à environ 1/8 ème du diamètre interne du manchon (24), de telle sorte que l'onde de choc résultant de l'explosion du filament, possède un front d'onde pratiquement sphérique.

13. Dispositif suivant la revendication 12, caractérisé en ce que la surface interne du manchon (24) est ellipsoïde.

14. Dispositif suivant la revendication 12, caractérisé en ce que la surface externe du manchon (24) est sphérique.

15. Dispositif suivant la revendication 12, caractérisé en ce que le manchon (24) est rempli avec un milieu de transfert d'énergie acoustique soluble dans l'eau (26) remplissant l'espace entre le filament et le manchon.

FIG. 1

FIG. 2

FIG. 3

FIG. 4

FIG. 5

FIG. 6

FIG. 7

FIG. 9

FIG. 8

FIG. 10

FIG. 11

FIG 12a

FIG 12b

FIG. 13

FIG. 14

ENERGY STORAGE
CAPACITOR BANK
AND
IGNITRON SWITCH

CO AXIAL LEAD

GROUND LEAD

CALANDRIA

~34~

13

~33~

32

31

118

18

A

18

31

A

0 043 672

4